# EUROPÄISCHE PATENTANMELDUNG

(11) **EP 2 712 850 A1**
(43) Veröffentlichungstag der Anmeldung: **02.04.2014**
(21) Anmeldenummer: 13181980.7
(22) Anmeldetag: 28.08.2013
(51) Int. Cl.: C03C 17/02, A45D 34/00, B65D 23/02, C08J 7/12

(54) **Verhinderung von Wechselwirkungen durch SiOx-Beschichtung von Behältnissen**

(30) Priorität: 28.09.2012 DE 102012217713
(71) Anmelder: Beiersdorf AG, 20253 Hamburg (DE)
(72) Erfinder: Sperber, Oliver, 22085 Hamburg (DE); Eckers, Lorenz, 21255 Tostedt (DE)

(57) **Zusammenfassung**

Die Erfindung bezieht sich auf Behältnisse und Applikatoren für kosmetische und dermatologische Produkte, deren Barriereeigenschaften durch Oberflächenbehandlung modifiziert wurden. Dadurch wird eine funktionale Schicht aus Siliziumoxid und/oder unlöslichen Metalloxid (Glas) zumindest auf den zubereitungsberührenden Oberflächen erzeugt.Das behältnis enthält in seinem die Oberfläche bildenden Material mindestens einen Farbstoff und/oder Hilfsstoff, insbesondere UV-Filter und/oder Weichmacher.

## Beschreibung

Die Erfindung bezieht sich auf Behältnisse, Funktions- und Systemverpackungen sowie Applikatoren aus Kunststoff für kosmetische und dermatologische Produkte, wobei die Kunststoffe gefärbt oder mit anderen Hilfsstoffen versetzt sind.

Die eingefüllten Produkte oder die darin enthaltenen Zubereitungsbestandteile (Rohstoffe) können aufgrund von Migration der den Masterbatchen beigemischten Farbstoffe oder Hilfsstoffe beeinträchtigt werden. Hierbei sind besonders Farbstoffe oder Hilfsstoffe zu nennen, welche sich aus dem Kunststoff lösen und somit die Produkte geruchlich oder sonstig negativ verändern.

Im pharmazeutischen Sektor, sowie in der kosmetischen Industrie, sind die Ansprüche an Packmittelmaterialien sehr hoch, insbesondere in Bezug auf Transparenz, chemischer und biologischer Reaktivität, Absorptionsvermögen, Permeabilität. Diese Anforderungen sind umso größer, wenn ein Packmittel zur Aufbewahrung von Flüssigkeiten verwendet wird und die Flüssigkeit eine Vielzahl von Komponenten, z. B. polaren Komponenten, unpolaren Komponenten, Ionen, Salzen, Ölen, Tensiden, oberflächenaktiven Substanzen, Konservierungsmitteln, Polymeren und makromolekularen Substanzen, enthalten.

Pharmazeutische und kosmetische Zubereitungen sind aus einer Vielzahl von Einzelkomponenten aufgebaute Kompositionen. Auch wenn im pharmazeutischen Sektor und der kosmetischen Industrie bereits synthetische Packmittel, insbesondere Kunststoffe, Verwendung finden, zeigen sich Probleme mit der Permeabilität, Reaktivität und Absorption, so dass vielfach zerbrechliches und schweres Glas als Behältermaterial eingesetzt werden muss.

Kosmetische und dermatologische Zubereitungen werden zunehmend komplizierter. Waren die Grundlagen für kosmetische und dermatologische Zubereitungen in der Vergangenheit einfache Emulsionssysteme, so werden heutzutage eine ganze Palette von kosmetischen und dermatologischen Wirk- und Hilfsstoffen in die Zubereitungen eingearbeitet. Auch die Emulsionsgrundlagen basieren auf zunehmend komplexeren Emulgatorsystemen, die einen entscheidenden Beitrag zur Produktperformance liefern.

Die früher gebräuchlichen Applikationsformen als Krem oder Lotion wurde in den letzten Jahrzehnten durch neue Applikationsformen wie zum Beispiel Pumpsprays und Roll-on erweitert. Die dazu eingesetzten Packmittel sind damit nicht mehr die klassische Glasflasche oder Blechdose, sondern in der Regel Kunststoff-Behältnisse und -Applikatoren.

Glas stellt für moderne kosmetische und dermatologische Zubereitungen immer noch ein ideales Behältermaterial dar, da es nur in sehr seltenen Fällen mit den Inhaltsstoffen wechselwirkt und keinerlei Diffusion von Inhaltsstoffen in das Glas erfolgt.

Durch die eingeschränkten Gestaltungsmöglichkeiten und die Bruchanfälligkeit und das hohe Gewicht von Glas ist der Einsatz jedoch rückläufig und es wird auf moderne Materialien wie Kunststoffe zurückgegriffen. Die aus Kostengründen für Massenprodukte verwendbaren Kunststoffe und die für die Einfärbung eingesetzten Farbzusätze und anderen Hilfsstoff, wie z. B. UV-Filter und Weichmacher, haben jedoch den Nachteil, dass relativ häufig Wechselwirkungen mit den Zubereitungen auftreten. Neben der Reaktion des Kunststoffes mit dem Inhalt, ist die Reaktion der Farbzusätze und Hilfsstoffe welche sich im Kunststoff befinden, das häufigste Problem. Weichmacher z. B. stehen im Verdacht hormonartige Wirkung im menschlichen Körper zu entfalten und unterliegen daher weitreichenden gesetzlichen Beschränkungen.

Einzelne Farbbestandteile oder Hilfsstoffe wandern aus dem Kunststoff in das Produkt und verursachen chemische Veränderungen. Hierdurch werden die Produkteigenschaften der Zubereitung negativ beeinflusst. Insbesondere können Farbstoffe und Weichmacher zu Hautirritationen führen. Dies kann dann zu mangelnden Haltbarkeiten und Absatzschwierigkeiten des Produktes am Markt führen. Um dieses Problem zu lösen, werden nur hochwertige und stabile Farbzugaben und möglichst geringe Mengen an Hilfsstoffen eingesetzt. Dies stellt eine unbefriedigende und teilweise teure Lösung dar.

Die EP 1722962 schildert die Schwierigkeiten synthetischer Verpackungsmaterialien für kosmetische und pharmazeutische Produkte. Es werden darin insbesondere einzelne Nachteile der Verpackungsmaterialien aus Polyvinylchloride (PVC), Polyethylen (PE), Polypropylen (PP) oder Polybuten (PB) dargestellt, durch die verschiedene Öle migrieren können. Als Problemlösung wird auf die Beschichtung der Packmittel mit resistenten Materialien, wie Acrylnitrile oder Polychlortrifluorethylen hingewiesen.

Die EP 1722962 offenbart jedoch als Lösung Folien zur Verpackung flüssiger Produkte oder dergleichen, wobei die Folie eine erste Polyolefinschicht, eine Verbindungsschicht, gebildet aus Copolymer eines Polyolefins und Glycidylmethacrylat, und eine Schicht aus Polychlortrifluorethylen (PCTFE) umfasst. Behältnisse aus diesen Folien sind jedoch labil und eignen sich daher nicht für Verpackungen denen über einen längeren Zeitraum Produkte entnommen werden sollen. Diese Folien stellen eine ausreichende Migrationsbarriere dar, sind aber sehr teuer und bedeuten einen erhöhten Fertigungsaufwand.

Die DE 102008034957 offenbart einen anderen Lösungsansatz zur Vermeidung der Ölmigration durch ein polyolefinisches Packmittel, indem Ölmigrationsinhibitoren der Emulsionszubereitung zugesetzt werden. Diese Inhibitoren vermindern bzw. verhindern die Migration verschiedener Öle in bzw. durch das polyolefinische Packmittel.

Wie die Ausführungen in der DE 102008034957 zu Polyolefin-Verpackungen zeigen, ist die Chemikalienbeständigkeit bei allen Polyolefinen gut, jedoch beispielsweise die Diffusion von Gasen sowie von Aromastoffen und ätherischen Substanzen durch PE relativ hoch.

Es zeigt sich weiterhin, dass es Probleme bei der Verpackung von lipidhaltigen kosmetischen Zubereitungen in Polyolefinverpackungen gibt.

So sind beispielsweise kosmetische Deodorantien oder Antitranspirantien in Form von Mikroemulsionen nicht mit polyolefinischen Packmitteln, insbesondere Polypropylen-Packmitteln, kompatibel. Das bedeutet, die in diesen beispielhaften Deo-/AT-Zubereitungen enthaltene Lipidkomponente Dicaprylylether diffundiert mit der Zeit in das PP-Packmittel und bewirkt so eine Herauslösung bzw. Verdrängung von Farbstoffen und/oder Hilfsstoffen (wie z. B. Weichmacher).

Nachteilig ist, dass zur Lösung der Migrationsproblematik gemäß DE 102008034957 der Zubereitung bestimmte Migrationsinhibitoren zugesetzt werden müssen. Dies wiederum schränkt die Formulierungsfreiheit ein bzw. erfordert eine aufwendige Anpassung der Zubereitung an diese Migrationsinhibitoren.

Wünschenswert ist es daher Packmittel unterschiedlicher Materialien und Zubereitungen unterschiedlichen Inhalts zusammen zu führen, ohne dass es zu der beschriebenen Migration aus dem Packmittel in die Zubereitung kommt.

Ziel und Aufgabe der Erfindung ist es preisgünstige Behältnissen, Funktions- und Systemverpackungen sowie Applikatoren zur Verfügung zu stellen, deren Barrierreeigenschaften insbesondere gegenüber Farbzugaben und Hilfsstoffen im Kunststoff, eine Verwendung für kosmetische oder dermatologische Zubereitungen ermöglichen.

Diese Aufgabe wird durch die Verwendung von oberflächenbehandelten Behältnissen, Funktions- und Systemverpackungen sowie Applikatoren zur Bereitstellung und Applikation von kosmetischen und/oder dermatologischen Zubereitungen erreichet, wobei durch die Oberflächenbehandlung eine funktionale Schicht zumindest auf den zubereitungsberührenden Oberflächen erzeugt wurde.

Eine Oberflächenbehandlung im Sinne der erfindungsgemäßen Verwendung, ist die Beschichtung der entsprechenden Oberfläche mit unlöslichen inerten anorganischen Substanzen, wie zum Beispiel Siliziumoxid und/oder unlöslichen Metalloxiden. Eine solche Beschichtung wird im Rahmen der Erfindung als Glas bezeichnet.

Glas, also eine Schicht aus Siliziumoxid und/oder unlöslichen Metalloxiden, ist ein inertes, hydrophobes, optisch transparentes, biokompatibles, polymeres Beschichtungsmaterial mit einem weiten industriellen Anwendungsspektrum.

Die Beschichtung des Substrates erfolgt durch Plasmapolymerisation.

Bei der Plasmapolymerisation werden dampfförmige organische Vorläuferverbindungen (Precursor-Monomere) in der Prozesskammer durch ein Plasma zunächst aktiviert. Durch die Aktivierung entstehen ionisierte Moleküle und es bilden sich bereits in der Gasphase erste Molekülfragmenten in Form von Clustern oder Ketten. Die anschließende Kondensation dieser Fragmente auf der Substratoberfläche bewirkt dann unter Einwirkung von Substrattemperatur, Elektronen- und Ionenbeschuss die Polymerisation und somit die Bildung einer geschlossenen Schicht.

Dabei ist praktisch jedes Substratmaterial wie z. B. Kunststoffe, insbesondere PET, PP, PE, PLA, SAN und ABS, sowie Glas, Keramik und Silikone mit Glas beschichtbar. Durch die gasförmige Abscheidung aus dem Plasma werden auch Strukturen erreicht und beschichtet, die durch Abscheidung aus Flüssigkeiten nicht beschichtbar sind, wie z. B. scharfe Ränder und Spitzen oder Hinterschneidungen.

Als Precursor werden gasförmige oder im Vakuum flüchtige Substanzen eingesetzt, die durch Mikrowellenentladung, plasmaaktivierte Variante der chemischen Gasphasenabscheidung (PE-CVD), das Glas bilden. Zum Aufbau von erfindungsgemäßen Gläsern aus Siliziumoxid eignen sich besonders gut Hexamethyldisiloxan (HMDSO) und/oder Hexamethyldisilazan (HMDSN) in einer mit Sauerstoff dotierten Atmosphäre, woraus sich eine SiOₓ-Schicht abscheidet und als Nebenprodukte CO₂ und H₂O beziehungsweise NO_{Y} entstehen.

Die Reaktion sieht wie folgt aus (nicht stöchimetrische Darstellung):

Si(CH₃)₃-O-Si(CH₃)₃ + O₂ -> SiOₓ + CO₂ + H₂O

Si(CH₃)₃-N-Si(CH₃)₃ + O₂ -> SiOₓ + CO₂ + NOy + H₂O

Faktisch werden HMDSO und/oder HMDSN, zwei flüssige Siloxan-Öle, die oder einzeln mit einem Gemisch aus O₂ und oder Argon in einen hochevakuierten Hohlkörper (bspw. eine Flasche) über eine Gaslanze eingesprüht im Vakuum mittels einer Mikrowellenentladung zersetzt. Die Mikrowellenentladung lässt ein Plasma entstehen, welches zu dieser Zersetzungsreaktion führt. Die Bindung der SiOₓ Schicht erfolgt nicht allein durch physikalischen Schichtaufbau, sondern auch durch echte, kovalente Bindungen welche die aktivierte Polymeroberfläche mit dem SiOₓ eingeht.

Glas besitzt gute Barriereeigenschafte und Oberflächeneigenschaften. Aufgrund dessen werden Glasbeschichtungen hauptsächlich in zwei Bereichen eingesetzt, zur Beschichtung von Gläsern (Brillengläser oder auch Windschutzscheiben & Fassadenscheiben), um spezielle, wasserabweisende Effekte zu erreichen und Glasscheiben gegenüber dem Aussalzen und der Hydrolyse unanfälliger zu machen und zur Innenbeschichtung von Kunststoffgetränkeflaschen (meist PET), um hier für eine erhöhte Gas- und Aromabarriere zu sorgen.

Erfindungsgemäße Glasbeschichtungen sind eine hydrophobe, chemisch resistente Beschichtung mit sehr guter Barrierenwirkung gegenüber anorganischen und organischen Medien (z. B. Ölen), starken Säuren, Laugen, Gasen und Wasserdampf. Als dünne und transparente Beschichtung ist sie geeignet für komplex gestaltete Substrate auch auf Kanten. Als biostabile und biokompatible Beschichtung sind sie zulassungsfähig, zum Beispiel bei der FDA.

Die dadurch aufgebauten weit unter 1 Mikrometer starken funktionellen Dünnschichten beeinträchtigen die normalen Materialeigenschaften wir Festigkeit, Farbe, Elastizität nicht, führen jedoch zu deutlich verbesserten Diffusionsbarriereeigenschaften (Migration in das Füllgut wird verhindert bzw. verringert.).

Besonders vorteilhaft sind Schichten mit einer Dicke von 10 bis 250 nm, da bei höheren Schichtdicken die Brüchigkeit stark zunimmt. Besonders vorteilhaft sind Schichtdicken von 30 bis 50 nm, da hier die Barrierewirkung in Bezug auf die mechanische Stabilität optimal ist.

Die Modifikation von Kunststoffoberflächen durch Siliziumoxid- oder Metalloxid-Beschichtung ist an sich aus der Lebensmittelindustrie bekannt (WO 1995/21948). Ziel dieser herkömmlichen Modifizierungen ist es, die Diffusion von Sauerstoff aus der Umgebungsluft in die Lebensmittel und die Absorption von Lebensmittelbestandteilen in die Verpackungswände zu verhindern bzw. zu verringern. Eine solche Behandlung wird daher auch nur an den mit Lebensmitteln in Kontakt kommenden Oberflächen ausgeführt.

Die zu beschichtenden Oberflächen werden im Beschichtungsprozess automatisch durch die Plasmabehandlung gereinigt, so dass keine spezielle Vorbehandlung nötig ist.

Im Sinne der erfindungsgemäßen Verwendung ist es daher sinnvoll, oberflächenbehandelte Behältnissen, Funktions- und Systemverpackungen sowie Applikatoren aus Polyethylen (PE, insbesondere HDPE), Polypropylen (PP) und Polyethylentherephthalat (PET) sowie StyrolPolymere wie PS, SAN oder ABS in Verbindung mit kosmetischen und/oder dermatologischen Zubereitungen zu verwenden.

Erfindungsgemäß bevorzugt werden Hohlkörper mit einer gewissen Steifigkeit, wie zum Beispiel Tuben-Flaschen (sogenannte Tottles), Flaschen sowie Tiegel beschichtet.

Besonders vorteilhaft ist es, die beschichteten Materialien in Verbindung mit kosmetischen oder dermatologischen Zubereitungen zu verwenden.

Unter dem Begriff Masterbatch bzw. Farbgranulat versteht man Kunststoffadditive in Form von Granulaten mit Gehalten an Farbmitteln oder Additiven, die höher sind als in der Endanwendung. Sie werden dem natürlichen Kunststoff (Rohpolymer) zum Einfärben oder zur Veränderung der Eigenschaften beigemischt. Zum Einen die Farb-Masterbatches, die zum Einfärben von Kunststofferzeugnissen dienen, zum Anderen Additiv-Masterbatches, die für bestimmte Eigenschaften der Endprodukte sorgen, wie zum Beispiel UV-Stabilisierung, Flammschutz, Antistatik oder Antiblock sowie Kombinations-Masterbatches, die sowohl Farbstoffe als auch Additive enthalten. Einteilung in natürliche und synthetisch hergestellte Pigmente.

Bei den anorganischen Pigmenten wird zwischen natürlichen und synthetisch hergestellten Pigmenten unterschieden. Zur ersten Gruppe gehören Erden und Mineralien (Erdfarben, Mineralweiß), die zu ihrer Anwendung keiner oder nur einer mechanischen Aufbereitung (zumeist Trocknen und Mahlen) bedürfen. Zur zweiten Gruppe gehören anorganische Pigmente wie etwa Metalleffektpigmente, Ruß, Weißpigmente, Eisenoxidpigmente oder Zirkonsilikate, also Syntheseprodukte aus unterschiedlichen Herstellungsverfahren.

Industriell werden aufgrund der stabileren Qualität und der höheren Reinheit fast nur noch synthetisch hergestellte anorganische Pigmente hergestellt.

Chemisch können die industriell wichtigsten Pigmente in acht Stoffklassen eingeteilt werden. Im Einzelnen sind dies Titandioxid, Ruß, Bismutpigmente, Oxide und Hydroxide, Eisencyanblau, Ultramarin, Cadmiumpigmente und Chromatpigmente.

Die Gruppe der Oxide und Hydroxide wird weiter unterteilt in Eisenoxidpigmente, Chromoxid und Mischphasenoxidpigmente wie Rinmans-Grün, (letztere mit den Untergruppen Spinellpigmente, Hämatitpigmente, Inverse Spinellpigmente und Rutilderivate). Die Gruppe der Chromatpigmente unterteilt sich weiter in Chromgelb, Chromgrün und Molybdate.

Ruß nimmt hierbei eine Sonderstellung ein. Ruß ist per Definition anorganisch. Es wird aufgrund der geringen Partikelgröße und der daraus resultierenden anwendungstechnischen Eigenschaften oft als organisches Pigment eingeordnet.

Bevorzugt sind die Packmittel aus Polyolefinen aufgebaut oder zumindest beinhalten sie Polyolefine (PE, PP). Aber auch andere Packmaterialien wie Kunststoffe (inkl. deren Blends) wie Styrol-Polymere (PS, SAN, ABS, etc.), PET, PMMA, PC, die Familie der PHA's, PHB's, PLA, Cellulose,-Derivate - aber auch Glas kann Bestandteil erfindungsgemäßer Packmittel sein. Auch Roll-on Verpackungen deren Kugel und/oder Fitment aus PE bzw. PP aufgebaut sind, sind als erfindungsgemäße polyolefinische Packmittel zu verstehen.

Ebenso sind unter polyolefischen Packmitteln alldiejenigen Packmittel zu verstehen, die vollständig aus Polyolefinen bestehen oder nur Teile aus Polyolefinen, insbesondere Polypropylen, umfassen, die in Kontakt mit der Zubereitungen stehen können.

Da ein Packmittel beispielsweise auch ein bag-in-can System darstellen kann, indem eine Zubereitung in einem im Packmittel enthaltenen zusätzlichen Beutel aufbewahrt wird, ist erfindungsgemäß sowohl der innere Beutel als auch das äußere Packmittel als Packmittel zu verstehen.

Ebenso erfindungsgemäß ist eine Beschichtung des Packmittels mit Glas nur an den Stellen notwendig an denen das Packmittel in Berührung mit der sie enthaltenen Zubereitungen kommen kann. Am Beispiel bag-in can wäre dabei das umgebende Packmittel beispielsweise nur an der Ausgabeöffnung, an der die Zubereitung auf den Beutel trifft, mit Glas zu beschichten. Dies ermöglicht einen ressourcensparenden Einsatz der erfindungsgemäßen Glasbeschichtung.

Als Packmittel werden erfindungsgemäß insbesondere Tuben, Flaschen wie Roll-ons und andere stabile Kleinhohlkörper, Tiegel, Sticks, Airless-Spender, Lotion- und Zerstäuberpumpen und Pumpenbauteile, Deckel, Applikatoren, Aerosol-Header (Sprühköpfe), Steigrohre, Sachets und dafür geeignete Folien bzw. Verbundmaterialien angesehen.

Die positive Wirkung einer erfindungsgemäßen Beschichtung auf das Migrationsverhalten von niedermolekularen Substanzen wurde durch folgenden Versuch nachgewiesen.

Auf der Behälterinnenseite erfindungsgemäß mittels Plasma- Beschichtungsverfahren der Firma PLASMAX mit SiOₓ beschichtete HDPE- Behältnisse mit einem Füllvolumen von 400ml wurden mit pa. Ethanol gefüllt und verschlossen. Auf die Behälteraußenfläche wurde Diethylphthalat (Fa. Merck) bzw. C12-15 Alkylbenzoat (Tegosoft TN 2 der Fa. Evonik Industries) aufgetragen. Einmalig wurde hierfür ein Tuch mit den genannten Stoffen beauftragt, welches dann mittels eines Selbstklebeetiketts auf den Flaschen fixiert wurde. Nach 6 Monaten wurde der Gehalt an Diethylphthalat bzw. C12-15 Alkylbenzoat im Ethanol bestimmt.

Um die Beständigkeit der SiOₓ-Beschichtung zu prüfen, wurde ein Teil der Proben einer regelmäßigen Verformungsbelastung (zusammendrücken des Behälters im oberen Drittel um ca. 4mm pro Seite mit den Fingern) unterzogen.

Das Ethanol aus den Behältnissen wurde ohne weitere Probenvorbereitung mittels GC/MS im simultanen SIM-SCAN-Modus untersucht (Trennsäule Restek Stabilwax-DA, 30m x 0,25mm ID x 0,5µm df). Die Quantifizierung erfolgt mittels externer Kalibrierung.

Das Ergebnis ist in Tabelle 1 wiedergegeben. Es zeigt sich, dass selbst unter Verformungsbelastung die Migration von Diethylphthalat bzw. C12-15 Alkylbenzoat sehr viel geringer ist, als bei unbeschichteten Behältnissen.

**Tabelle 1:**

| Probe | Lagerung | Gehalt Diethylphthalat | Gehalt C12-15 Alkylbenzoat |
|---|---|---|---|
| unbeschichtet | Raumtemp. | 19 ppm | 94 ppm |
| beschichtet | Raumtemp. | 0,11 ppm | 7,7 ppm |
| beschichtet + Belastung | Raumtemp. | 0,06 ppm | 6,7 ppm |
| unbeschichtet | 40°C | 215 ppm | 726 ppm |
| beschichtet | 40°C | 4,6 ppm | 16 ppm |
| beschichtet + Belastung | 40°C | 4,2 ppm | 17 ppm |

## Patentansprüche

1. Verwendung von oberflächenbehandelten Behältnissen, Funktions- und Systemverpackungen sowie Applikatoren zur Bereitstellung und Applikation von kosmetischen und/oder dermatologischen Zubereitungen, **dadurch gekennzeichnet, dass** durch die Oberflächenbehandlung eine funktionale Schicht aus Siliziumoxid und/oder unlöslichen Metalloxid (Glas) zumindest auf den zubereitungsberührenden Oberflächen erzeugt wurde und dass das Behältnis in seinem die Oberfläche bildenden Material mindestens einen Farbstoff und/oder Hilfsstoff, insbesondere UV-Filter und/oder Weichmacher aufweist.

2. Verwendung nach Anspruch 1, **dadurch gekennzeichnet, dass** das erfindungsgemäße Behältnis in seinem die Oberfläche bildenden Material mindestens einen Farbstoff aus der Gruppe Titandioxid, Ruß, Bismutpigmente, Oxide und Hydroxide, Eisencyanblau, Ultramarin, Cadmiumpigmente und Chromatpigmente aufweist.

3. Verwendung nach Anspruch mindestens einem der vorhergehenden Ansprüche, **dadurch gekennzeichnet, dass** das erfindungsgemäße Behältnis in seinem die Oberfläche bildenden Material mindestens einen Hilfsstoff aus der Gruppe der Weichmacher wie Adipinsäureester (Hexandisäureester), Sulfonsäureester, Phthalsäureester, Copolymerisate wie Polybutadienacrylnitril oder Ethylenvinylacetat, UV-Absorber wie z. B. o-Hydroxy-benzophenon aufweist.

4. Behältnisse für kosmetischen und/oder dermatologischen Zubereitungen, **dadurch gekennzeichnet, dass** die Behältnisse eine zumindest partiell durch Glasbeschichtung modifizierte Oberfläche aufweisen und dass das Behältnis in seinem die Oberfläche bildenden Material mindestens einen Farbstoff und/oder Hilfsstoff, insbesondere UV-Filter und/oder Weichmacher aufweist.

5. Behältnisse nach Anspruch 4, **dadurch gekennzeichnet, dass** die zubereitungsberührenden Oberflächenanteile, insbesondere die Innenwand, mit Glas beschichtet sind.

6. Applikatoren für kosmetischen und/oder dermatologischen Zubereitungen, **dadurch gekennzeichnet, dass** die Applikatoren eine zumindest partielle durch Beschichtung mit Glas modifizierte Oberfläche aufweisen und dass der Applikator in seinem die Oberfläche bildenden Material mindestens einen Farbstoff und/oder Hilfsstoff, insbesondere UV-Filter und/oder Weichmacher aufweist.

7. Applikator nach Anspruch 6, **dadurch gekennzeichnet, dass** der Applikator eine Lotionpumpe, eine Sprühpumpe, ein Airless-Spender, ein Roll-on Applikator, ein Pinsel, eine Bürste, ein Schwamm oder eine Pad ist.

8. Applikator nach Anspruch 7, **dadurch gekennzeichnet, dass** die gleitend miteinander in Kontakt stehenden Bauteile zumindest an ihren Gleitflächen eine modifizierte Oberfläche aufweisen, insbesondere Kolben und Zylinder in Pumpen, Airless-Spendern und Auftragskugel und Fitment in Roll-on Applikatoren.

9. Applikatoren oder Behältnisse nach einem der Ansprüche 4 bis 8, **dadurch gekennzeichnet, dass** die Glasschicht eine Dicke von 10 bis 250 Nanometer, insbesondere 30 bis 50 nm, aufweist.

10. Kombinationsprodukt umfassend ein Packmittel enthaltend eine kosmetische und/oder dermatologische Zubereitung, wobei die Zubereitung ein oder mehrere Lipide aufweist, **dadurch gekennzeichnet, dass** das Packmittel an den Berührungsflächen mit der Zubereitung zumindest teilweise mit Glas beschichtet ist und dass das Packmittel in seinem die Oberfläche bildenden Material mindestens einen Farbstoff und/oder Hilfsstoff, insbesondere UV-Filter und/oder Weichmacher aufweist.
